# EUROPÄISCHE PATENTSCHRIFT

(11) **EP 1 562 721 B1**
(45) Veröffentlichungstag und Bekanntmachung des Hinweises auf die Patenterteilung: **03.05.2006**
(21) Anmeldenummer: 03785502.0
(22) Anmeldetag: 12.11.2003
(51) Int. Cl.: B23Q 1/28, F16D 63/00, F16D 65/14, B23Q 1/58

(54) **REIBGEHEMME MIT NOTBREMSFUNKTION**
FRICTION LOCKING UNIT WITH AN EMERGENCY BRAKING FUNCTION
DISPOSITIF D'ARRET A FRICTION AVEC FONCTION DE FREINAGE D'URGENCE

(30) Priorität: 12.11.2002 DE 10252915
(43) Veröffentlichungstag der Anmeldung: 17.08.2005
(73) Patentinhaber: Zimmer GmbH, 77866 Rheinau (DE)
(72) Erfinder: ZIMMER, Günther, 77866 Rheinau (DE); ZIMMER, Martin, 77866 Rheinau (DE)
(74) Vertreter: Schmid, Rudolf
(86) Internationale Anmeldenummer: PCT/DE2003/003752
(87) Internationale Veröffentlichungsnummer: WO 2004/043644

(56) Entgegenhaltungen:
- DE-U- 20 002 915
- US-B1- 6 460 678

## Beschreibung

Die Erfindung betrifft eine Klemm- und/oder Notbremsvorrichtung zur Anbringung an einem mittels mindestens einer Führungsschiene geführten Schlitten, wobei die Vorrichtung mindestens ein Reibgehemme umfasst, das wenigstens eine, in einem Gehäuse gelagerte, an die Führungsschiene anpressbare Reibbacke sowie einen Federspeicher mit einem Federelement aufweist, und wobei das Reibgehemme mittels der Federkraft des Federelements in eine Richtung und zur Entlastung mittels einer von einem pneumatischen, hydraulischen, elektromagnetischen, elektromechanischen oder piezoelektrischen Antrieb erzeugten Vorschubkraft in die entgegengesetzte Richtung bewegbar ist.

Aus dem Prospekt "MK/BW/TK/KW/HK/AU Klemm- und Bremselemente für Linearführungen" der Zimmer GmbH, Rheinau-Freistett vom Januar 2001 ist eine Brems- und/oder Klemmvorrichtung mit einem dual wirkenden Schiebekeilgetriebe bekannt, vgl. Prospektseite 24 und 25. Eine derartige Vorrichtung ist auch aus dem Dokument DE 200 02 915 U1 bekannt. Bei diesen Vorrichtungen dient ein mittels eines pneumatischen Antriebs vorspannbarer Federenergiespeicher dem gasdrucklosen Klemmen und Bremsen. Bei einem z.B. störungsbedingten Druckabfall setzt das vorgespannte Federelement des Federenergiespeichers die auf Reibbacken wirkende Bremskraft frei. Der im Störfall von den bewegten Pneumatikteilen zu verdrängende Gasstrom bremst durch Drosselwirkung ein schnelles Ansprechen der Bremsvorrichtung.

Um das Federelement des Federspeichers vorzuspannen kann beispielsweise ein handelsüblicher Getriebemotor oder ein Mehrfach-Klemmrichtgesperre verwendet werden. Eine weitverbreitete Ausführung eines Mehrfach-Klemmrichtgesperres ist jahrzehntelang als Kfz-Wagenheber von Volkswagen hergestellt worden. Heute findet man derartige Klemmrichtgesperre u.a. in Baumärkten als Auspressvorrichtungen für mit Klebe- und Dichtmassen befüllte Einwegkartuschen.

Der vorliegenden Erfindung liegt die Problemstellung zugrunde, eine Klemm- und/oder Notbremsvorrichtung zu entwickeln, die bei großer Klemmkraft, geringem Bauraumbedarf und einer geringen Eigenmasse - besonders im Störfall - ein schnelles Ansprechen des vorrichtungseigenen Reibgehemmes aufweist.

Diese Problemstellung wird mit den Merkmalen des Hauptanspruchs gelöst. Dazu ist zwischen dem das Federelement spannenden Vorschubantrieb und dem Reibgehemme ein Sperrstück als Teil eines Gesperres angeordnet. Das Sperrstück ist mit einem Sperrerelement als Teil eines Gesperres bei gespanntem Federelement gegenüber dem Gehäuse fixiert. Das Sperrerelement wird von einem elektromagnetischen oder elektromechanischen Antrieb in seiner Sperrposition gehalten.

Die Klemm- und/oder Notbremsvorrichtung umfasst ein Reibgehemme und z.B. ein zweidimensionales ebenes Schiebekeilgetriebe zum Betätigen des Reibgehemmes. Das Reibgehemme wirkt über eine Reibbacke auf eine Führungsschiene, auf der der Maschinen- oder Messgeräteschlitten gelagert und geführt ist, der diese Vorrichtung trägt. Das Reibgehemme entwickelt seine Brems- und Klemmwirkung durch das Freisetzen von in einem Federspeicher gespeicherten Federenergie, die über das Schiebekeilgetriebe auf die Reibbacke übertragen wird.

Die Führungsschiene, an denen die Reibbacken zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden.

Um kurze Ansprechzeiten z.B. im Falle einer Not-Aus-Situation des Reibgehemmes zu erzielen, befindet sich zwischen den auf die Reibbacke wirkenden, eine Klemmkraft ermöglichenden Bauteilen und dem Federelement des Federspeichers ein Rast- oder Riegelgesperre. Letzteres blockiert die Vorspannung im Federspeicher, um die Federspannkraft im Bedarfsfall möglichst schnell auf die Reibbacken umlenken zu können. Zum Beispiel fixiert eine als Sperrer wirkende Kugel ein zwischen dem Federspeicher und dem das Reibgehemme anlenkenden Getriebezug. Der Sperrer wird hierbei z.B. elektromagnetisch in seiner Sperrposition gehalten. Bei einer Unterbrechung der Stromzufuhr zu diesem Elektromagneten wird - unabhängig vom Grund der Unterbrechung der Stromzufuhr - der Sperrer freigegeben, wodurch mittels der nun schlagartig freigesetzten Federenergie das Reibgehemme den die Vorrichtung tragenden Schlitten an der Führungsschiene abbremst und festklemmt.

Weitere Einzelheiten der Erfindung ergeben sich aus den Unteransprüchen und der nachfolgenden Beschreibung eines schematisch dargestellten Ausführungsbeispiels.
- Figur 1:: Dimetrische Ansicht einer montierten Klemm- und/oder Notbremsvorrichtung mit einem Elektromotor;
- Figur 2:: Figur 1 ohne Gehäuse und Federelement;
- Figur 3:: Spannantrieb und Schiebekeilgetriebe mit Teilschnitt;
- Figur 4:: Teile eines Gesperres;
- Figur 5:: vgl. Figur 4, jedoch andere Ansicht;
- Figur 6:: ebener, horizontaler Längsschnitt zu Figur 1 mit betätigter Reibgehemmeklemmung;
- Figur 7:: Querschnitt zu Figur 6;
- Figur 8:: ebener, horizontaler Längsschnitt zu Figur 1 mit nicht betätigter Reibgehemmeklemmung;
- Figur 9:: Querschnitt zu Figur 8;
- Figur 10:: Dimetrische Ansicht einer montierten Klemm- und/oder Notbremsvorrichtung mit einem Klemmrichtgesperre;
- Figur 11:: Figur 10 ohne Gehäuse, ungespannt;
- Figur 12:: Figur 11 mit gespanntem Federelement;
- Figur 13:: Draufsicht zu Figur 10;
- Figur 14:: vertikaler Längsschnitt zu Figur 13 durch den Hubmagnet;
- Figur 15:: horizontaler Mittenlängsschnitt zu Figur 13 ;
- Figur 16:: vertikaler Längsschnitt zu Figur 13 durch das Klemmrichtgesperre;
- Figur 17:: Stirnansicht zu Figur 10
- Figur 18:: Figur 15 mit gespanntem Federelement;
- Figur 19:: Figur 16 mit gespanntem Federelement;
- Figur 20:: Figur 13 mit gespanntem Federelement;
- Figur 21:: Prinzipskizze des Klemmrichtgesperres.

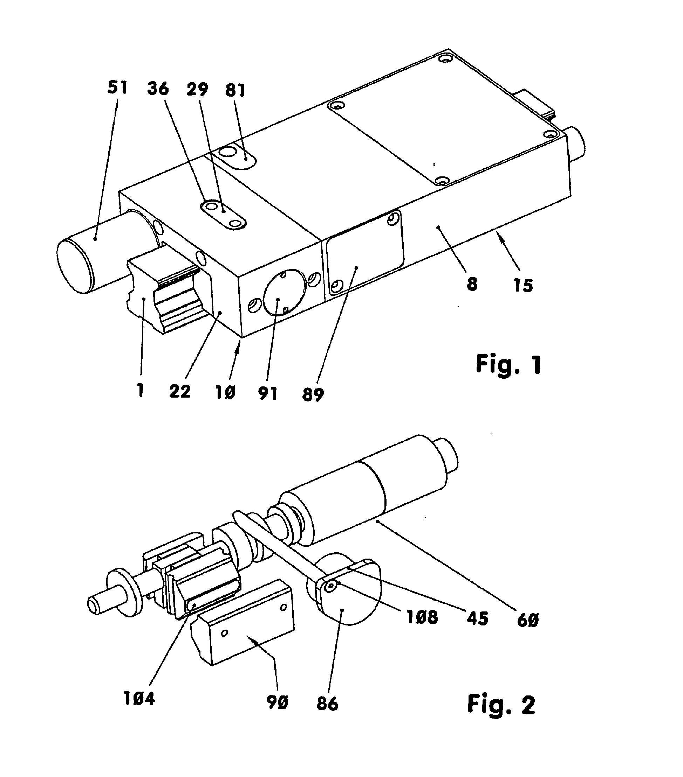

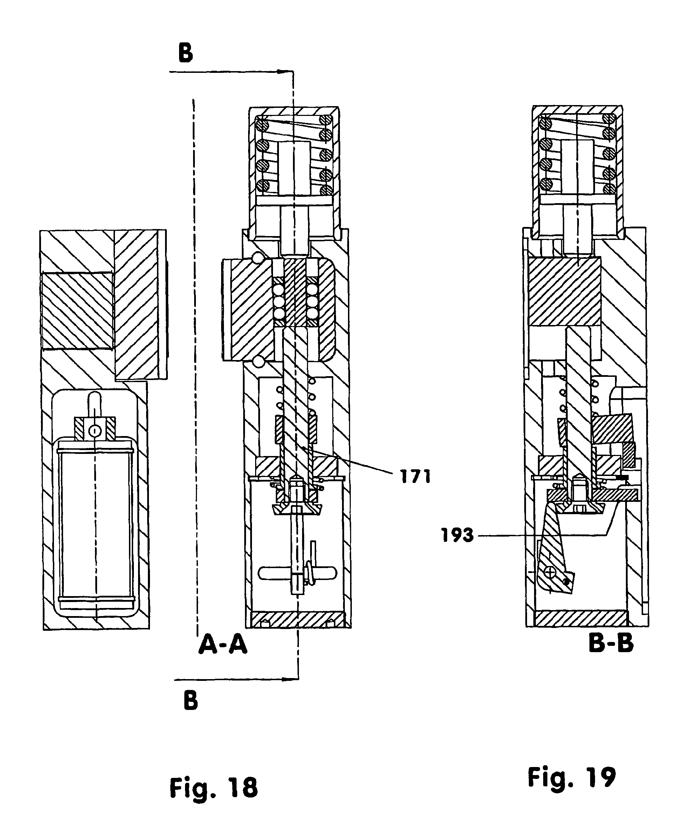

Die Figuren 1 bis 3, 6 bis 9 und 10 bis 20 zeigen eine Klemm- und/oder Notbremsvorrichtung, wie sie beispielsweise in vielen Horizontal- oder Vertikalschlitten u.a. in Werkzeug- und Messmaschinen verwendet werden. Die Vorrichtungen der vorliegenden Ausführungsform sind hierbei am entsprechenden Geräteschlitten so angeordnet, dass sie die - die Schlittenlängsführung vorgebenden - Führungsschienen mit mindestens einem Reibgehemme umgreifen.

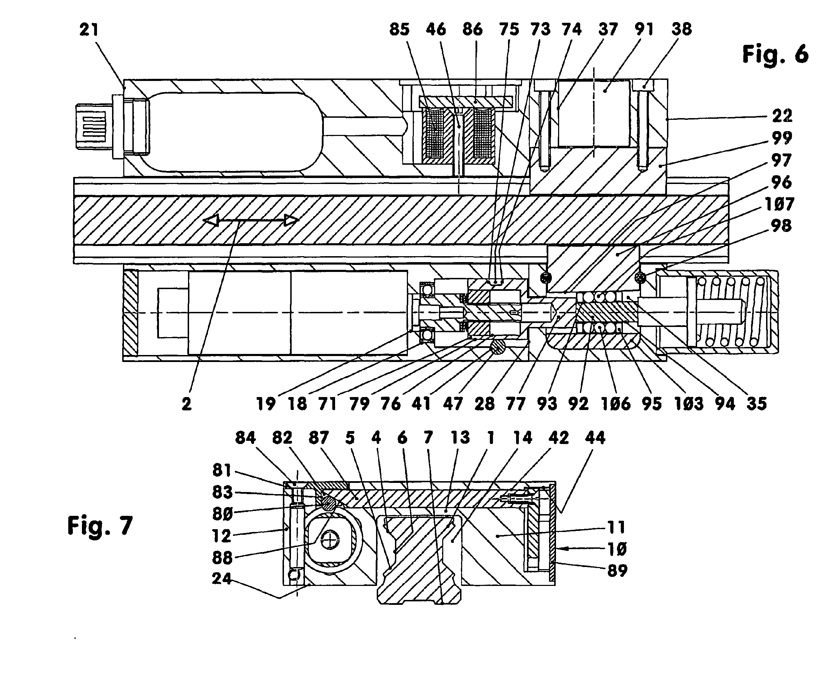

U.a. in den Figuren 1 und 7 ist ein Abschnitt einer doppelprismatischen Führungsschiene (1) dargestellt. Die Führungsschiene (1) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche (7) z.B. das sie tragende hier nicht dargestellte Maschinenbett.

An den im Schnitt der Figur 7 schräg angeordneten Führungsflächen (4, 5) liegen die korrespondierenden Führungsflächen des gelagerten Schlittens direkt gleitgelagert oder indirekt wälzgelagert an. Zwischen je zwei Führungsflächen (4, 5) befindet sich hier je eine den Nutgrund bildende vertikale Stegfläche (6), an der sich beim Bremsen die Reibbeläge (104) des Reibgehemmes (90) abstützen.

Die Führungsschiene (1) wird von einem beispielsweise zweiteiligen Gehäuse (10, 15) beidseitig umgriffen. Das Gehäuse besteht aus einem Gehemmegehäuse (10) und einem Antriebsgehäuse (15). Beide Gehäuse(10, 15) sind - bei zumindest annähernd gleichen Querschnitten - entlang der Führungsschiene (1) hintereinander angeordnet und miteinander starr verbunden. Im Gehemmegehäuse (10) ist eine Klemm- und Notbremskräfte erzeugende Vorrichtung integriert. Das im Prinzip c-förmige Gehemmmegehäuse (10) besteht aus einem Quader, vgl. Figur 7, der quer zu seiner Längsausdehnung eine Umgriffsnut (14) aufweist, die einen rechteckförmigen Querschnitt hat. In dem durch die Nut (14) entstandenen Freiraum ist die Führungsschiene (1) platziert. Die Nutbreite ist wenige Millimeter breiter als die Führungsschienenbreite in dem vom Gehäuse (10) umgriffenen Bereich. Die Nuttiefe entspricht ca. 81% der Führungsschienenhöhe. Das Gehemmegehäuse (10) hat ca. mittig oberhalb der Führungsschiene (1) eine langlochförmige Ausnehmung (36), in der ein Führungsstein (29) in Längsrichtung mit wenig und in Querrichtung mit viel Spiel eingesetzt ist. Der Führungsstein (29) sitzt normal zu der von der Quer- und Längsrichtung aufgespannten Ebene formschlüssig im Gehäuse (10). Über seine Querbeweglichkeit in der Ausnehmung (36) kann er die einseitige Klemmbewegung des Reibgehemmes (90) ausgleichen. Er ist mit dem auf der Führungsschiene (1) bewegten Schlitten starr verbunden.

Das Gehäuse (10, 15) hat z.B. gemäß Figur 7 - quer zur Führungslängsrichtung (2) - eine Gesamtbreite, die ca. die dreifache Breite der Führungsschiene ausmacht. Die Gesamthöhe des Gehäuses (10, 15) beträgt z.B. 120% der Führungsschienenhöhe. Die Länge des Gehäuses (10, 15) - in der Zeichnungsebene von Figur 6 gemessen - entspricht beispielsweise dem achtfachen der Führungsschienenhöhe aus Figur 2.

Das Gehäuse (10, 15) hat eine rechte (11) und eine linke Gehäusezone (12). Beide Zonen (11, 12), befinden sich unterhalb einer Flanschzone (13).

Das Gehemmegehäuse (10) hat in der Gehäusezone (11) eine Querbohrung (37) mit Feingewinde. Gegenüber dieser Querbohrung (37) befindet sich in der Gehäusezone (12) eine weitgehend rechteckige Ausnehmung (31), die vom Boden her in die Gehäusezone (12) eingearbeitet ist und zur Umgriffsnut (14) hin offen ist. Im Bereich des Bodens (24) ist sie mittels eines Deckels (35) verschlossen. Nach Figur 6 hat das Gehemmegehäuse (10) zwei Bohrungen (32, 33) die koaxial zueinander und parallel zur Längsrichtung (2) der Führungsschiene (1) ausgerichtet sind.

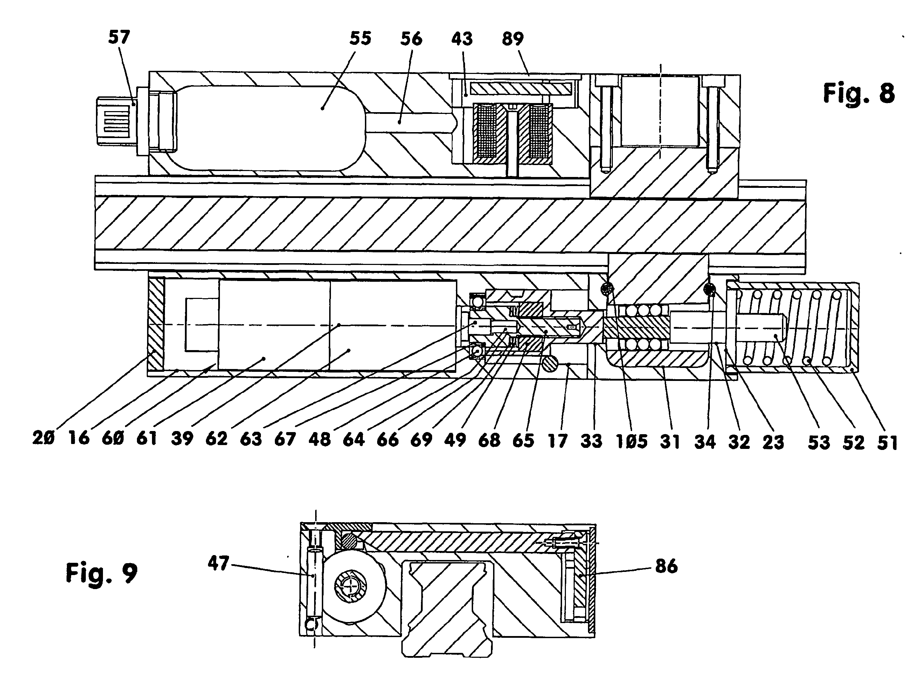

In der Ausnehmung (31) ist das Schiebekeilgetriebe des Reibgehemmes (90) angeordnet. Letzteres umfasst im Wesentlichen einen Schiebekeil (92), zwei Käfige (95) mit Zylinderrollen (106, 107), eine Abrollplatte (103) und eine bewegliche Reibbacke (96). Der Schiebekeil (92) wird zur Betätigung des Reibgehemmes (90) nach den Figuren 6 und 8 z.B. wälzgelagert nach rechts bewegt. Dabei drückt er die Reibbacke (96) gegen die Führungsschiene (1). Der Schiebekeil (92) ist ein trapezförmiger Körper mit rechteckigen Querschnitten, vgl. Figuren 6 und 8. Er ist mit seinen Stirnflächen zwischen dem Federkolben (53) und einem Sperrstück (71) eingespannt. Ggf. ist er an einem oder beiden Teilen befestigt oder angeformt. Der Schiebekeil (92) hat u.a. eine Stütz- (94) und eine Keilfläche (93). Beide Flächen sind rechteckig und z.B. plan. Die der Druckfläche (97) der Reibbacke (96) zugewandte Keilfläche (93) schließt mit dieser z.B. einen spitzen Winkel von 1 bis 5 Winkelgraden ein. Die Stützfläche (94) verläuft parallel zur Abrollfläche der benachbarten Abrollplatte (103). Beispielsweise verjüngen sich die Querschnitte des Schiebekeils (92) linear mit zunehmendem Abstand weg vom Federkolben (53). Im Ausführungsbeispiel ist das erste Viertel der Länge des Schiebekeils (92) nicht abgeschrägt. Zwischen der Druckfläche (97) der Reibbacke (96) und der Keilfläche (93) des Schiebekeils (92) sowie zwischen der Stützfläche (94) des Schiebekeils (92) und der Abrollplatte (103) bewegen sich die Zylinderrollen (106) und (107) mit halber Schiebekeilgeschwindigkeit.

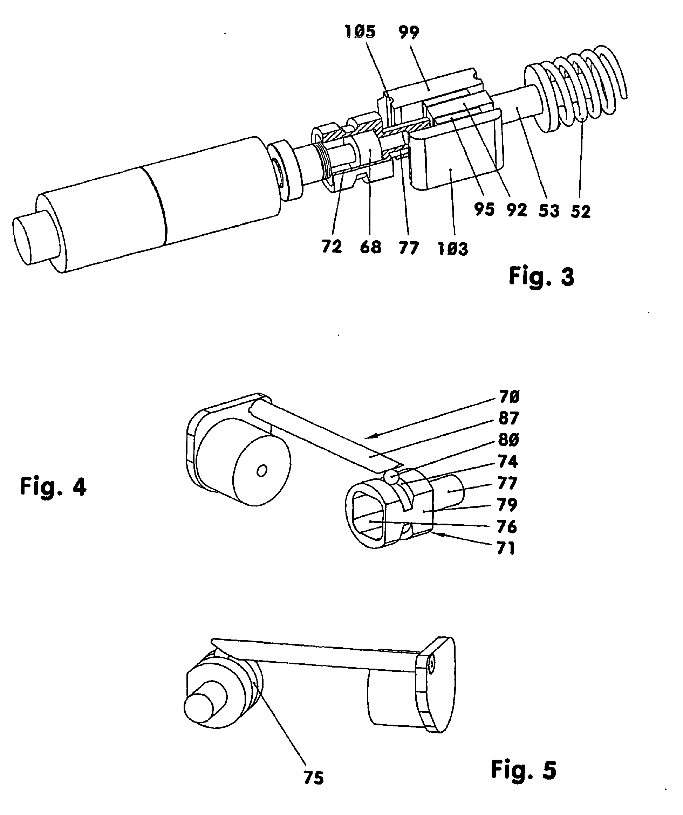

Die Ausnehmung (31) hat nach den Figuren 6 und 8 zumindest rechts und links neben der Reibbacke (96) je eine Halbrundnut (34), die entsprechenden Halbrundnuten (105) in der Reibbacke (96),vgl. Figur 3, bei nicht betätigtem Reibgehemme (90) gegenüberliegen. Zwischen den paarweise angeordneten Halbrundnuten (34, 105) ist je ein Elastomerelement (98) eingelegt. Letztere besorgen u.a. den Rückhub der Reibbacke (96).

Gegenüber der Reibbacke (96) befindet sich in der Gehäusezone (12) eine relativ zum Gehäuse (10, 15) ortsfeste Reibbacke (99). Letztere stützt sich am Gehemmegehäuse (10), in dem sie z.B. durch zwei Schrauben (38) vorpositioniert ist, mittels einer Einstellschraube (91) ab. Die Einstellschraube (91) sitzt über ein Feingewinde in der Querbohrung (37). Sie ist eine zylindrische Scheibe, die an der äußeren Stirnfläche Bohrungen für den Eingriff eines Zapfenschlüssels aufweist. Das Feingewinde endet z.B. in einer Ringnut, in der ggf. ein Quetschring als Schraubensicherung eingelassen ist.

Die Reibbacken (96) und (99) sind hier beispielsweise prismatische Körper, deren Konturen teilweise mit der Nutkontur der Führungsschiene (1) korrespondieren. Jede Reibbacke (96, 99) ist im Wesentlichen ein langgestreckter Quader, der zur Führungsschiene (1) hin im Bereich deren Führungsflächen (4, 5) je eine 45°-Schräge aufweist. Die Länge der Reibbacke (96) entspricht z.B. - gemessen in der Längsrichtung (2) - annähernd der Länge des Gehemmegehäuses (10), während die Länge der Reibbacke (96) geringfügig kürzer ist als die Ausdehnung der Ausnehmung (31) in Längsrichtung (2).

In der der Stegfläche (6) der Führungsschiene (1) zugewandten Außenfläche ist beispielsweise ein Reibbelag (104) eingepresst, vgl. Figur 2. Dazu ist in die Reibbacke (96, 99) von der Außenfläche her eine Vertiefung eingearbeitet, deren Tiefe z.B. das Vierfache des Betrages ist, um den der Reibbelag (104) über die umliegende Außenfläche übersteht. Der Überstand beträgt beispielsweise 0,5 mm. Die Vertiefung stellt sich in der Außenfläche als Rechteck mit abgerundeten Ecken dar. Die Breite ist geringfügig kleiner als die Höhenausdehnung der Stegfläche (6).

Für den Reibbelag (104) wird ein pulvermetallurgisch hergestellter Reibwerkstoff auf Bronzebasis verwendet. Der Reibwerkstoff enthält zusätzlich keramische Bestandteile. Der Reibbelag (104) ist in die Vertiefung (101) eingepresst. Ggf. ist der Reibbelag (104) an den seitlichen Wandungen der Vertiefung verklebt oder verlötet.

Es ist auch möglich den Reibbelag z.B. als eine Reihe von mehreren runden, eckigen oder polygonalen Scheiben in entsprechende Vertiefungen einer Reibbacke anzuordnen.

Gemäß den Figuren 6 und 8 befindet sich rechts neben dem Schiebekeilgetriebe für das Reibgehemme an der Gehäusezone (12) eine zylindrische Vertiefung (23) mit Feingewinde. Im Feingewinde dieser Vertiefung (23) ist eine Federbüchse (51) eingeschraubt. Die Federbüchse (51), eine dünnwandige zylindrische Büchse mit planem Boden, lagert mindestens ein Federelement (52), das mit Vorspannung auf die Kolbenbodenseite des Federkolbens (53) wirkt. In den Figuren 3, 6 und 8 werden als Federelement jeweils eine Schraubendruckfeder (52) dargestellt. Ggf. kann im Innenraum dieser Feder (52) eine zweite Schraubendruckfeder mit z.B. entgegengesetzter Steigung angeordnet sein. Auch kann anstelle des Federelements (52) zur Bildung eines Federspeichers eine Tellerfedersäule, ein Tellerfederpaket oder eine Kombination von beidem angeordnet werden.

Im Feingewindebereich der Vertiefung (23) befindet sich z.B. eine einen Quetschring aufnehmende Nut. Dort ist z.B. auch eine Entlüftungsnut eingearbeitet, die parallel zur Mittellinie (39) ausgerichtet ist.

Auf der anderen Seite der Gehäusezone (12) des Gehemmegehäuses (10) befindet sich im Antriebsgehäuse (15) eine mehrfach gestufte Gehäusebohrung (16-19). Ihre Mittellinie ist beispielsweise deckungsgleich mit der Mittellinie (39). Von der Stirnfläche (21) besteht die Gehäusebohrung aus der - der Aufnahme des Antriebs (60) dienenden - Antriebsbohrung (16), die zur Stirnfläche (21) in einem kurzen Gewindeabschnitt zur Lagerung eines Deckels (20) endet. Im Bereich der Gehäusemitte geht die Bohrung (16) in einen engeren Zentriersitz (19) über. Die plane Übergangsfläche zwischen der Bohrung (16) und dem Zentriersitz (19) dient als Montageflansch zur stirnseitigen Befestigung des Antriebs (60) mittels Verschrauben. Die Schrauben sind in den Figuren nicht dargestellt.

Auf den Zentriersitz (19) folgt ein Lagersitz (18) und eine Gesperrebohrung (17). Der Durchmesser der Gesperrebohrung (17) beträgt ca. zwei Drittel der Höhe der Führungsschiene (1). Der Durchmesser des Lagersitzes (18) ist z.B. kleiner als der Durchmesser der Gesperrebohrung (17) und größer als der des Zentriersitzes (19).

Im Antriebsgehäuse (15) befindet sich ferner eine Bohrung (41), die die Gesperrebohrung (17) tangential schneidet. Sie ist normal zur Bodenfläche (24) orientiert und befindet sich - in Bohrungslängsrichtung gesehen - im mittleren Bereich der Gesperrebohrung (17). Ihre Mittellinie tangiert die Wandung der Gesperrebohrung (17).

In der Gesperrebohrung (17) ist ein Sperrstück (71) angeordnet. Das Sperrstück (71) ist ein zweifach gestufter Bolzen, der sich aus einem Führungskörper (72) und einem z.B. koaxial angeordneten Schubbolzen (77) zusammensetzt. Der größere Führungskörper (72) hat eine zylindrische Hüllfläche, über die das Sperrstück (71) in der Gesperrebohrung (17) gelagert ist. In die Hüllfläche befindet sich z.B. ca. mittig ein Kugelkanal (73) in Form einer Ringnut oder einer profilierten, geradlinigen Kerbe. Zudem ist die Hüllfläche parallel zur Mittellinie des Bauteils, ggf. auch parallel zur Seitenwand (8), abgeflacht. Die Tiefe der Abflachung (79) entspricht z.B. dem halben Durchmesser der Bohrung (41). In der Bohrung (41) ist ein Führungsbolzen (47), z.B. ein Zylinderstift, eingepresst, an dem die Abflachung (79) zur Verdrehsicherung des Sperrstücks (71) anliegt.. Ggf. kann der Führungsbolzen (47) und die Bohrung (41) in der Ebene der Abflachung (79) geneigt angeordnet werden, um eine größere Abstützüberdeckung zu erzielen.

Im Führungskörper (72) befindet sich eine Mutterausnehmung (76), in der eine Spindelmutter (68) gelagert ist. Die Spindelmutter (68) hat zur Verdrehsicherung in der Mutterausnehmung (76) einen quadratischen Querschnitt mit z.B. abgerundeten Ecken. Die Mutterausnehmung (76), deren Tiefe ca. der dreifachen Breite der Spindelmutter (68) entspricht, hat einen geringfügig größeren, z.B. vergleichbaren Querschnitt. Die Spindelmutter (68) und die Mutterausnehmung (76) können dreieckige Polygonquerschnitte, Kerb- bzw. Keilwellenquerschnitte oder dergleichen aufweisen.

Der zylindrische Schubbolzen (77) ragt durch die Sperrstückbohrung (33) in die Ausnehmung (31) hinein und liegt dort am Schiebekeil (92) an.

Die Spindelmutter (68) sitzt auf einer gestuften Gewindespindel (65). Letztere steckt über ihre gestufte Bohrung (66) formschlüssig auf der Getriebewelle (63) des Antriebs (60). Dazu hat die Getriebewelle (63) im vorderen Bereich ein Sechskantprofil (64). Im Bereich der Bohrung (66) hat die Gewindespindel (65) z.B. ca. den doppelten Durchmesser ihres Gewindeabschnittes. Dort hat sie im Bereich der dem Antrieb (60) zugewandten Stirnfläche einen Lagersitz (67). Zwischen dem Lagersitz (67) und dem Lagersitz (18) der Gehäusebohrung (16-19) ist ein Rillenkugellager (48) angeordnet.

Auf der Getriebewelle (63) ist zwischen dem Wellenbund (69) und der Spindelmutter (68) ein Tellerfederpaket (49) angeordnet.

Der Antrieb (60) umfasst ein mehrstufiges Getriebe (62), das zwischen dem im Antrieb (60) integrierten Elektromotor (61) und der Getriebewelle (63) angeordnet ist. Ggf. ist der Elektromotor (61) mit einem Tachogenerator ausgestattet.

Nach den Figuren 7 und 9 befindet sich im Antriebsgehäuse (15) oberhalb des Sperrstückes (71) ein mittels einer Senkschraube (84) befestigtes Kugelgehäuse (81). Das Kugelgehäuse (81) beinhaltet eine langlochartige, zur Gehäusemitte offene Kugelführung (82). Das Langloch (82), in dem eine Sperrerkugel (80) geführt ist, endet oberhalb des Sperrstücks (71) in einem halbzylindrischen Anschlag (83). Es hat eine Breite, die geringfügig größer ist als der Durchmesser der Sperrerkugel (80). Das Langloch (82) ist so positioniert, dass die am Anschlag (83) anliegende Sperrerkugel (80) ungefähr mittig oberhalb des Kugelkanals (73) des - in Sperrstellung verharrenden - Sperrstückes (71) angeordnet ist. An das seitlich zur Gehäusemitte offene Ende der Kugelführung (82) schließt sich eine quer zur Längsrichtung (2) orientierte Führungsbohrung (42) an, in der ein Sperrerbolzen (87) gelagert ist. Letzterer endet in der anderen Gehäusezone (11) an einer vor einem Elektromagnet (85) liegenden Ankerplatte (86). Der Elektromagnet (85) und die Ankerplatte (86) befinden sich in der Gehäusezone (11) in einer mit einem rechteckigen Seitendeckel (89) verschließbaren Antriebsausnehmung (43), vgl. Figuren 1, 2, 4 und 5.

In der Antriebsausnehmung (43) ist der Elektromagnet (85) mit einer Zentralschraube (46) im Antriebsgehäuse (15) befestigt. Die Ankerplatte (86) ist in einem zwischen dem Elektromagnet (85) und dem Seitendeckel (89) liegenden Freiraum angeordnet. Die Höhe des Freiraums entspricht der Summe aus der Ankerplattendicke und dem Sperrerbolzenhub. Die z.B. ebene Ankerplatte (86), an der der Sperrerbolzen (87) normal ausgerichtet verschraubt ist, hat mindestens eine zur Verdrehsicherung geeignete Anlagekante oder -fläche (45),vgl. Figur 2. Hier liegt die Anlagefläche (45) parallel zur Bodenfläche (24) und kontaktiert die Antriebsausnehmung (43) an deren oberen Wandung (44), vgl. Figur 7.

Der Sperrerbolzen (87) hat an seinem freien Ende in der Gehäusezone (12) eine abgeschrägte Stirnfläche, die die Funktion einer Sperrerkeilfläche (88) hat. Der Sperrerbolzen (87) ist im Gehäuse (15) so orientiert, dass die Normale der Sperrerkeilfläche (88) in die Richtung auf das Sperrstück (71) zeigt und in einer zur Längsrichtung (2) normalen Ebene liegt. Die Sperrerkeilfläche (88) schließt mit dem Boden (24) der Vorrichtung einen Winkel von z.B. 30 Winkelgraden ein.

Um die Position der Sperrerkeilfläche (88) gegenüber der Ankerplatte (86) zu sichern, ist der Sperrerbolzen (87) im Bereich seiner Verschraubung z.B. mittels mindestens eines Kerbstiftes (108) gesichert. Der Sperrerbolzen (87) kann auch im Bereich der Verschraubung durch eine andere - formschlüssig in die Ankerplatte (86) eingreifende - Profilierung gesichert sein.

Im Antriebsgehäuse (15) befindet sich nach Figur 6 oder 8 neben der Antriebsausnehmung (43) ein Hohlraum (55), der mit der Antriebsausnehmung (43) über eine Kabelbohrung (56) in Verbindung steht. Zur linken Stirnseite (21) hin gibt es eine Öffnung, in die eine Kabeltülle (57) eingeschraubt ist. Der Hohlraum (55), der über einen nicht dargestellten Kanal mit der Antriebsbohrung in der anderen Gehäusezone (12) verbunden ist, dient der Aufnahme einer Steuer-Regelelektronik.

Während des Normalbetriebes des die Vorrichtung tragenden Schlittens liegen die Reibbacken (96, 99) nicht an der Führungsschiene (1) an. Das Reibgehemme (90) ist bei vorgespanntem Federspeicher (51-53) nicht betätigt.

Um die Schraubenfeder (52) im Federspeicher(51-53) vorzuspannen, wird das Sperrstück (71) aus der in Figur 8 gezeigten Position in die Position verschoben, die in Figur 6 dargestellt ist. Dazu schraubt die motorisch angetriebene Gewindespindel (65) die Spindelmutter (68) nach rechts. Die Spindelmutter schiebt hierbei das Sperrstück gegen die Stirnfläche (28) des Gehemmegehäuses (10). Beispielsweise durch den Anstieg des Motordrehmoments bei dieser Blockierfahrt oder durch entsprechend angeordnete Endschalter, vergleichbare Sensoren oder Sensorsysteme, wird die Motorbestromung abgeschaltet. Ggf. wird zur Schonung des Motors zwischen der Stirnwand (28) und der rechten Stirnfläche des Führungskörpers (72) eine Tellerfeder angeordnet.

Mit dem Kontaktieren der Stirnwand (28) ist zum einen das Federelement (52) maximal gespannt und zum anderen befindet sich der Kugelkanal (73) des Führungskörpers (72) direkt unterhalb der Kugelführung (82) des Kugelgehäuses (81). Die Sperrerkugel (80) fällt in den Kugelkanal (73) und kommt an den dortigen Kanalflanken (74, 75) zur Anlage, vgl. Figuren 4 und 5. Die federseitige Kanalflanke (74) schließt mit der zur Mittellinie (39) verlaufenden Lotrechten einen Flankenwinkel von 0 bis 30 Winkelgraden ein, im Ausführungsbeispiel sind beispielsweise 20 Winkelgrade gewählt, während der Flankenwinkel der Kanalflanke (75) z.B. 40 Winkelgrade beträgt.

Die Sperrerkugel (80) wird durch das Einschalten des Elektromagneten (85) und das Vorschieben des Sperrerbolzens (87) in Richtung auf die Sperrerkugel (80) von der Sperrerkeilfläche (88) in dem Kugelkanal (73) fixiert. Dadurch ist das Sperrglied in der Gesperrebohrung (17) blockiert. Nun bewegt der Antrieb (60) über die Gewindespindel (65) mit umgekehrter Drehrichtung die Spindelmutter (68) zurück in die in Figur 6 gezeigte Position. Sobald die Spindelmutter (68) das Tellerfederpaket (49) erreicht, steigt das Motordrehmoment beim Drücken der Federn gegen den Wellenbund (69) sprunghaft an. Der Elektromotor (61) wird abgeschaltet. Jetzt ist die Klemm- und Notbremsvorrichtung für den Normalfahrbetrieb einsatzbereit.

Bei einem Nothalt und einem Stromausfall soll die Klemm- und Notbremsvorrichtung den tragenden Schlitten schnell und sicher abbremsen und blockieren. Auch bei einer normalen Maschinenabschaltung soll die Klemmvorrichtung den tragenden Schlitten zuverlässig geparkt halten.

Bei einer Unterbrechung der Stromzufuhr für den Elektromagneten (85) drückt der federbelastete Federkolben (53) über den Schiebekeil (92) die Sperrerkugel (80) über die Kanalflanke (74) aus dem Kugelkanal (73) in die Kugelführung (82) hinein. Der Sperrerbolzen (87) weicht zusammen mit der Ankerplatte (86) zurück. Die Ankerplatte (86) hebt vom Elektromagnet (85) ab.

Im Bereich der Gesperreausnehmung (31) legen sich mit zunehmendem Schiebekeilhub die Flächen (93, 94) an den in den Käfigen (95) geführten Zylinderrollen (106, 107) spielfrei an. Die außenliegenden Zylinderrollen (106) stützen den Schiebekeil (92) an der Abrollplatte (103) ab, während die innenliegenden Zylinderrollen (107) die Reibbacke (96) gegen den Widerstand der elastischen Rückhubelemente (98) gegen die Führungsschiene (1) und die Reibbacke (99) schiebt. Die Zylinderrollen (106, 107) wälzen nun zwischen den Bauteilen (103, 92, 96) so lange ab, bis sich im Ausführungsbeispiel ein Kräftegleichgewicht zwischen der Federkraft des Gehäuses (10) und der Federkraft des Federelements (52) eingestellt hat. Dann hat das Reibgehemme (90) seine maximale Klemmkraft erreicht. Die Reibbacken (96, 99) liegen über die Reibbeläge (104) an den Stegflächen (6) der Führungsschiene (1) an. Die für den Rückhub der Reibbacke (96) zuständigen Elastomerelemente (98) sind vorgespannt elastisch verformt. Die Klemm- und/oder Notbremsvorrichtung sitzt reibschlüssig an der Führungsschiene (1) fest.

Die einzelnen Klemmzustände der beiden unterschiedlichen Scheibekeilgetriebe können ggf. über Sensoren oder ein Sensorsystem überwacht werden.

Die Klemm- und/oder Notbremsvorrichtung kann auch pro Gehäusezone (11) und (12) je ein eigenes schiebekeilgetriebebetätigendes Gehemme, einschließlich Federspeicher und eines elektrischen, pneumatischen oder hydraulischen Spannantriebes, haben.

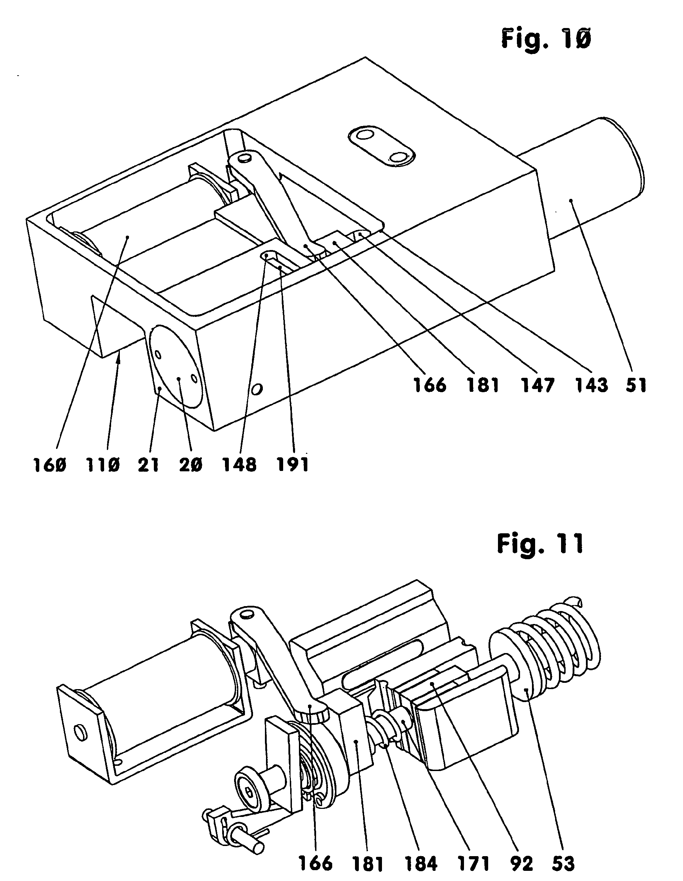

In den Figuren 10 bis 20 wird das das Reibgehemme (90) betätigende Federelement (52) nicht durch einen elektromotorischen Antrieb (60), sondern durch ein hubmagnet- und hebelgetriebebetätigtes Hubgesperre (170) gespannt.

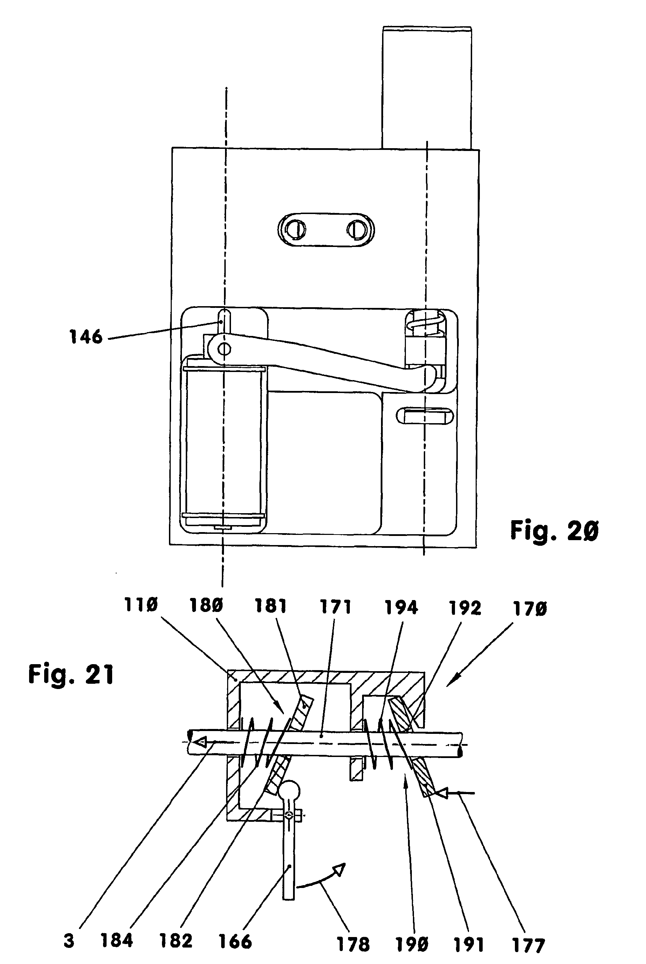

Das Hubgesperre (170) ist ein Mehrfach-Klemmrichtgesperre, vgl. Figur 21. Es umfasst ein Vorschubgesperre (180) und ein Haltegesperre (190). Beide sind in einem Gehäuse bzw. Gestell (110) angeordnet. In diesem Gestell (110) wird als Sperrstück eine in den Gestellbohrungen gelagerte Spannspange (171) verwendet. Auf der Spannstange (171) sitzen als Sperrer das Vorschubsperrelement (181) und das Haltesperrelement (191). Beide Teile sind in der Regel Platten bzw. Quader, die jeweils mit einer Bohrung (182, 192) versehen sind und deren Durchmesser geringfügig größer ist als der Durchmesser der Spannstange (171). Beide Sperrelemente (181, 191) stützen sich am Gestell (110) mit Hilfe von Federelementen (184, 194) ab. Die Federelemente (184, 194) sitzen in Vorschubrichtung (3) vor den Sperrelementen (181, 191). Unterhalb des Vorschubsperrelements (181) ist ein Hebel (166) dargestellt, der exzentrisch an diesem anliegt. Wird der Hebel (166) in Richtung des Pfeils (178) bewegt, drückt er gegen das Vorschubsperrelement (181), das die Spannstange (171) unter kraftschlüssigem Klemmen bzw. Verkanten in Richtung (3) bewegt. Hierbei gleitet die Spannstange (171) unter Aufheben der Klemmwirkung durch die Bohrung (192) des Haltesperrelements (191), das dazu geringfügig in Richtung des Pfeils (177) schwenkt. Am Ende des Vorschubhubs drückt das Federelement (194) das Haltesperrelement (191) wieder in seine Klemmstellung. Hinter dem nun entgegen der Richtung (178) schwenkenden Hebel (166) folgt - unter der Wirkung des Federelements (184) - auf der Spannstange (171) rutschend das Vorschubsperrelement (181). Am räumlichen Ende der Schwenkbewegung des Hebels (166) verklemmt sich die Bohrung (182) des Vorschubspannelements (181) an der Spannstange (171). Ein neuer Hub kann wieder eingeleitet werden.

Die Bohrungen (182, 192) und die Spannstange (171) benötigen nicht zwingend einen runden Querschnitt. Andere Querschnittsformen sind auch denkbar.

In den Figuren 10 bis 20 ist ein Ausführungsbeispiel dieses Prinzips dargestellt. Dazu befindet sich nach Figur 10 in einem Gehäuse (110) ein Hubmagnet (160), der seinen Hub über einen Hebel (166) untersetzt auf das Vorschubsperrelement (181) überträgt. Nach Figur 11 verschiebt das Vorschubelement (181) entgegen dem Druck der Schraubenfeder (184) die Spannstange (171) gegen den Schiebekeil (92) und den Federkolben (53).

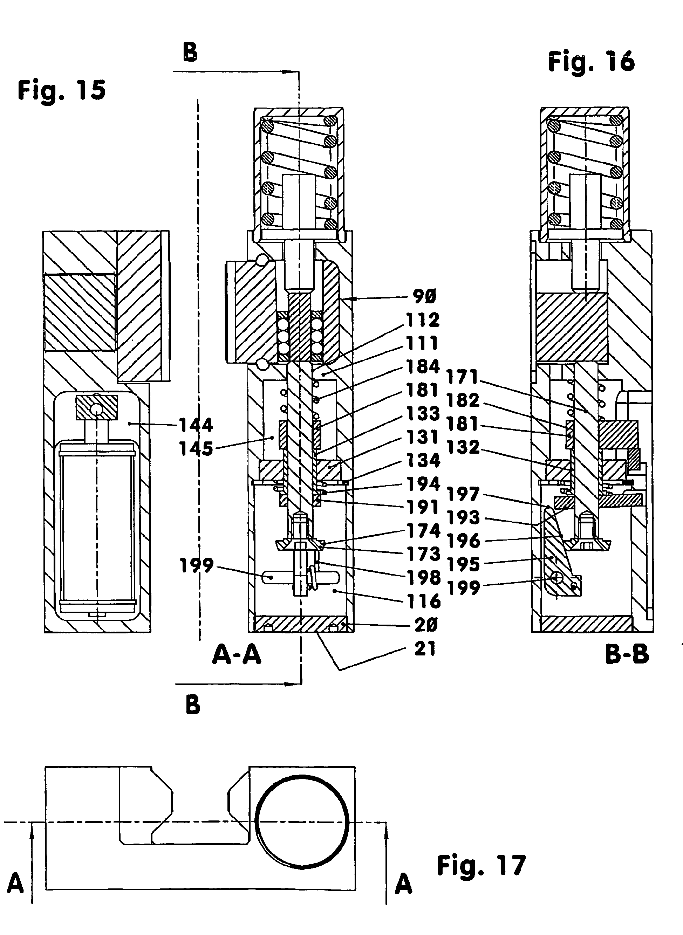

Der Hubmagnet (160) ist im Gehäuse (110) in einer Ausnehmung (143) gelagert. Die Ausnehmung (143) besteht aus zwei Hohlräumen (144) und (145), die beidseits der Umgriffsnut (14) eingearbeitet sind und oberhalb der Umgriffsnut (14) ineinander übergehen, vgl. Figur 15. Der zylindrische Hohlraum (145) grenzt zur Stirnseite (21) hin an einen durch einen Deckel (20) verschlossenen Haltegesperrehohlraum (116). Letzterer ist gegenüber dem Hohlraum (145) durch eine mittels eines Sicherungsringes (134) fixierte Sperrscheibe (131) getrennt. Die Sperrscheibe (131) hat eine zentrale Bohrung (132), in der die Spannstange (171), z.B. in einer Gleitbuchse (133), geführt ist. Der Hohlraum (145) ist über ein Langloch (147) mit einem annähernd rechteckigen Öffnungsquerschnitt nach oben hin mit der Ausnehmung (143) verbunden, vgl. Figur 10. Das Langloch (147) dient der seitlichen Längsführung des Vorschubsperrelements (181). Ein vergleichbares Langloch (148) befindet sich auch oberhalb des Haltegesperrehohlraums (116). Dort liegt mit viel Spiel der obere Bereich des Haltesperrelements (191) an.

Gegenüber dem Reibgehemme (90) ist der Hohlraum (145) durch eine z.B. angeformte Zwischenwandung (111) abgetrennt. In der Zwischenwandung (111) befindet sich eine zur Bohrung (132) fluchtende Bohrung (112). Auch in dieser Bohrung (112) ist die Spannstange (171) geführt. Zwischen der Zwischenwandung (111) und dem Vorschubsperrelement (181) sitzt auf der Spannstange (171) die Schraubendruckfeder (184).

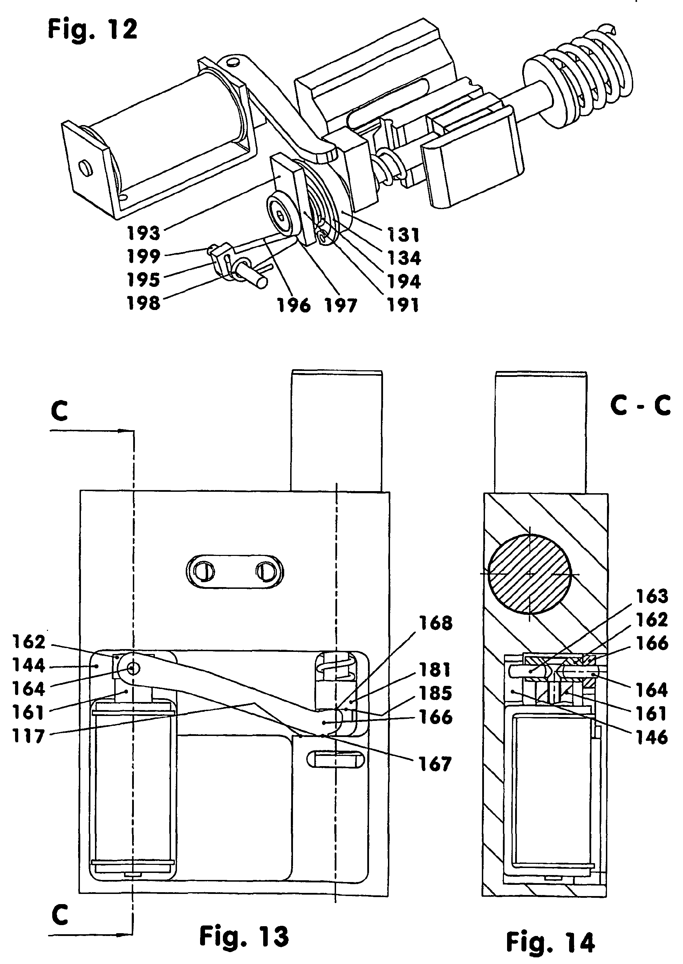

Das Vorschubsperrelement (181) ist z.B. ein quaderförmiges Bauteil mit einer außermittigen Bohrung (182), vgl. Figur 16. Im oberen Bereich seiner der Sperrscheibe (131) zugewandten Fläche (185) liegt der Kniehebel (166) mit seinem Hebelende (168) an, vgl. Figur 13. Zugleich stützt sich der Kniehebel (166) mit seinem Knie (167) an einem - räumlich oberhalb der Sperrscheibe (131) liegenden - Gehäuseinnenwandabschnitt (117) ab. Der Kniehebel (166) selbst ist im Bereich des Hohlraums (144) an dem Magnetanker (161) schwenkbar gelagert. An der Stirnseite des Magnetankers (161) ist dazu ein Querbalken (162) befestigt oder angeformt, der quer zur Ankermittellinie in zwei Bohrungen je einen Bolzen (163, 164) trägt. Auf dem oberen Bolzen, dem Schwenkbolzen (164), sitzt der Kniehebel (166). Der untere Bolzen, der Führungsbolzen (163), ragt in ein im Gehäuse (110) im Boden der Ausnehmung (144) angeordnete Längsnut (146) ein, vgl. Figur 14 und 20.

Der Hubmagnet (160) ermöglicht beispielsweise einen Hub von ca. 6 mm, vgl. Figuren 11 und 12 sowie 13 und 20. Aufgrund eines Kniehebeluntersetzungsverhältnisses von z.B. 15/1 wird am Vorschubsperrelement (181) ein Hub von 0,4 mm erzeugt, d.h. der Kniehebel (166) drückt beim Anziehen des Elektromagneten (160) das Vorschubsperrelement (181) ca. 0,4 mm vom Gehäuseinnenwandabschnitt (117) weg. Mit jedem Hub wird das Federelement (52) mehr vorgespannt und das Schiebekeilgetriebe bzw. Reibgehemme (90) entsprechend entlastet.

Am hinteren Ende der Spannstange (171) sitzt im z.B. zylindrischen Hohlraum (116) eine Anschlagplatte (173). Letztere ist hier ein Drehteil mit einem kegeligen oder sphärisch gewölbten Mantel (174). An diesem Mantel (174) liegt nach den Figuren 11 und 16 ein Keilhebel (195) an. Der Keilhebel (195) ist ein keilförmiger Hebel, der im Gehäuse (110) mittels eines in einer Bohrung sitzenden Keilhebellagerbolzens (199) schwenkbar gelagert ist. Der Bolzen (199) durchquert den Keilhebel (195) im breiteren, hinteren Bereich. Auf dem Bolzen (199) ist eine Spiralfeder (198) angeordnet, die den Keilhebel (195) mit seiner Spitze (197) voraus gegen die Spannstange (171) zu schwenken versucht. Der Keilhebel (195) liegt folglich mit seiner dem Mantel (174) zugewandten Flanke (196) an der Anschlagplatte (173) an. Die Flanke (196) kann zur Anpassung an die Arretierungs- und Löseaufgabe in Abstimmung mit der Mantelkontur der Anschlagplatte (173) jede erforderliche Krümmung haben.

Während des Spannens des Federelements (52) gleitet die Anschlagscheibe (173) am Keilhebel (195) entlang in Richtung auf das Haltesperrelement (191) zu. Die Spitze (197) schwenkt nach Figur 16 nach rechts bzw. gemäß Figur 11 nach oben. Sobald beim Spannen die Spitze (197) auf die rückwärtige Fläche (193) des Haltesperrelements (191) rutscht, verharrt der Elektromagnet (160) im bestromten Zustand in der Lage, die in den Figuren 12, 18 und 19 dargestellt ist. Der Vorgang zum Spannen des Federelements (52) ist beendet. Hierbei hält das mit der Spannstange (171) verklemmte Vorschubsperrelement (181) das Federelement (52) unter Vorspannung. Das Haltesperrelement (191) wird gleichzeitig soweit verschwenkt, dass dessen Bohrung (192), vgl. Figur 21, mit dem Mantel der Spannstange (171) annähernd konzentrisch liegt. Dabei hat das Haltesperrelement (191) keine Klemmwirkung mehr.

Beispielsweise bei einem Stromausfall wird der Hubmagnet (160) stromlos. Der Kniehebel (166) schwenkt in die u.a. in Figur 12 dargestellte Position. Dabei kippt das Vorschubhaltelement (181) in eine vertikale Lage, womit die Klemmwirkung zwischen den Teilen (181) und (171) aufgehoben wird. Durch die rückseitige Anlage des Keilhebels (195) am Haltesperrelement (191) fehlt auch dem Haltegesperre (190) die Klemmwirkung. In der Folge weichen die Spannstange (171), der Schiebekeil (92) und der Federkolben (53) in Wirkrichtung des Federelements (52) schlagartig zurück.

Während des Zurückweichens gleitet der Keilhebel (195) - verdrängt von der Anschlagplatte (173) - mit seiner Spitze (197) entlang der Fläche (193). Solange er an dieser Fläche (193) anliegt, kann das Haltesperrelement (191) seine Klemmwirkung nicht entfalten. Kurz vor dem Erreichen des maximalen Klemmhubs des Schiebekeils (92) rutscht die Spitze (197) von der Fläche (193). Das Haltesperrelement (191) kippt in Klemmstellung. Bis zum Verklemmen des Haltesperrelements (191) an der Spannstange (171) kann sich letztere noch um wenige Zehntel Millimeter bewegen.

Zum Lösen der Spitze (197) von dem Haltesperrelement (191) kann z.B. im Hohlraum (116) ein kleiner Hubmagnet angeordnet sein, der beispielsweise vor einem erneuten Spannen des Federelements (52) den Keilhebel (195) - durch einen zeitlich kurzen Impuls - in die in Figur 16 dargestellte Position schwenkt.

### Bezugszeichenliste:

- 1: Führungsschiene, doppeltrapezförmig
- 2: Führungslängsrichtung, Mittellinie
- 3: Vorschubrichtung
- 4, 5: Führungsflächen
- 6: Stegfläche
- 7: Bodenfläche
- 8: Seitenfläche (mit Deckel)

- 10: Gehemmegehäuse, Gehäuse
- 11: Gehäusezone, rechts
- 12: Gehäusezone, links
- 13: Flanschzone
- 14: Umgriffsnut
- 15: Antriebsgehäuse
- 16: Antriebsbohrung
- 17: Gesperrebohrung
- 18: Lagersitz
- 19: Zentriersitz
- 20: Deckel, Stirndeckel
- 21: Stirnflächen, Stirnseite von (15)
- 22: Stirnflächen, Stirnseite, federseitig von (10)
- 23: Vertiefung
- 24: Gehäuseboden, Bodenfläche
- 28: Stirnfläche, Montagefuge zwischen (10) und (15)
- 29: Führungsstein

- 31: Ausnehmung, Gesperreausnehmung
- 32: Federkolbenbohrung
- 33: Sperrstückbohrung
- 34: Halbrundnut
- 35: Deckel, Bodendeckel
- 36: Ausnehmung für (29)
- 37: Querbohrung
- 38: Schrauben
- 39: Mittellinie

- 41: Bohrung für Führungsbolzen (47)
- 42: Führungsbohrung für Sperrerbolzen (87)
- 43: Antriebsausnehmung
- 44: Wandung, oben
- 45: Anlagefläche
- 46: Schraube für Elektromagnet (85)
- 47: Führungsbolzen
- 48: Wälzlager, Rillenkugellager
- 49: Tellerfederpaket

- 51: Federbüchse
- 52: Federelement, Schraubendruckfeder, Feder
- 53: Federkolben
- 55: Hohlraum für Elektronik
- 56: Kabelbohrung
- 57: Kabeltülle

- 60: Antrieb
- 61: Motor, ggf. mit Tachogenerator
- 62: Getriebe
- 63: Getriebewelle
- 64: Sechskantprofil
- 65: Gewindespindel
- 66: Bohrung, gestuft
- 67: Lagersitz
- 68: Spindelmutter
- 69: Wellenbund

- 70: Gesperre
- 71: Sperrstück

- 72: Führungskörper
- 73: Rast- oder Riegelausnehmung, Kugelkanal, Ringnut
- 74, 75: Kanalflanken, rechts, links
- 76: Mutterausnehmung
- 77: Schubbolzen
- 79: Abflachung

- 80: Sperrerkugel
- 81: Kugelgehäuse
- 82: Kugelführung
- 83: Anschlag
- 84: Senkschraube
- 85: Elektromagnet
- 86: Ankerplatte
- 87: Schiebekeilelement, Sperrerbolzen
- 88: Sperrerkeilfläche
- 89: Seitendeckel

- 90: Reibgehemme
- 91: Einstellschraube
- 92: Schiebekeil
- 93: Keilfläche
- 94: Stützfläche
- 95: Käfige
- 96: Reibbacke, beweglich
- 97: Druckfläche
- 98: Rückhubelement, elastisch, Elastomerelement
- 99: Reibbacke

- 103: Abrollplatte
- 104: Reibbelag
- 105: Halbrundnut
- 106: Zylinderrolle, außenliegend
- 107: Zylinderrolle, innenliegend
- 108: Kerbstift

- 110: Gehäuse, Gestell
- 111: Zwischenwand
- 112: Bohrung

- 116: Haltegesperrehohlraum
- 117: Gehäuseinnenwandabschnitt

- 131: Sperrscheibe
- 132: Bohrung
- 133: Gleitbuchse
- 134: Sicherungsring

- 143: Gehäuseausnehmung
- 144: Hohlraum für Hubmagnet
- 145: Hohlraum für Vorschubgesperre
- 146: Längsnut für (163)
- 147: Langloch zu (145) für (181)
- 148: Langloch zu (116) für (191)

- 160: Hubmagnet
- 161: Magnetanker, Anker
- 162: Querbalken
- 163: Führungsbolzen
- 164: Schwenkbolzen

- 166: Kniehebel, Hebel
- 167: Knie
- 168: Hebelende
- 170: Hubgesperre, Klemmrichtgesperre
- 171: Spannstange, Sperrstück

- 173: Anschlagplatte
- 174: Mantel, kegelstumpfförmig

- 177: Löserichtung für (191)
- 178: Betätigungsrichtung für (166)

- 180: Vorschubgesperre
- 181: Vorschubsperrelement
- 182: Bohrung

- 184: Federelement, Schraubenfeder
- 185: Fläche von (181)

- 190: Haltegesperre
- 191: Haltesperrelement
- 192: Bohrung
- 193: Fläche, rückwärtig
- 194: Federelement

- 195: Keilhebel
- 196: Flanke, Keilfläche
- 197: Keilspitze
- 198: Spiralfeder, Federelement
- 199: Keilhebellagerbolzen

## Patentansprüche

1. Klemm- und/oder Notbremsvorrichtung zur Anbringung an einem mittels mindestens einer Führungsschiene geführten Schlitten, wobei die Vorrichtung mindestens ein Reibgehemme (90) umfasst, das wenigstens eine, in einem Gehäuse (10,15,110) gelagerte, an die Führungsschiene anpressbare Reibbacke (96) sowie einen Federspeicher (51-53) mit einem Federelement (52) aufweist, und wobei das Reibgehemme (90) mittels der Federkraft des Federelements (52) in eine Richtung und zur Entlastung mittels einer von einem pneumatischen, hydraulischen, elektomagnetischen, elektromechanischen oder piezoelektrischen Antrieb erzeugten Vorschubkraft in die entgegengesetzte Richtung bewegt wird, **dadurch gekennzeichnet,**
- **dass** zwischen dem Antrieb (60, 160) und dem Federspeicher (51-53) ein Sperrstück (71, 171) als Teil eines Gesperres (70, 170) angeordnet ist,
- **dass** das Sperrstück (71, 171) mit einem Sperrerelement (80, 181) als Teil eines Gesperres (70, 170) bei gespanntem Federelement (52) gegenüber dem Gehäuse (10, 15, 110) fixiert ist und
- **dass** das Sperrerelement (80, 181) von einem elektromagnetischen oder elektromechanischen Antrieb (85, 160-199) in seiner Sperrposition gehalten wird.

2. Vorrichtung gemäß Anspruch 1, **dadurch gekennzeichnet, dass** das Sperrerelement (80) als Teil eines im Gehäuse (10, 15) angeordneten Schiebekeilgetriebes (73, 80, 88) von einem mittels eines elektromagnetischen oder elektromechanischen Antriebs bewegbaren Schiebekeilelement (87) formschlüssig und/oder kraft-schlüssig in einer Rast- oder Riegelausnehmung (73) positioniert wird.

3. Vorrichtung gemäß Anspruch 1, **dadurch gekennzeichnet, dass** der Antrieb zum Halten des Sperrelements (80, 181) eine Elektromagnet (85) ist.

4. Vorrichtung gemäß Anspruch 1, **dadurch gekennzeichnet, dass** das Gesperre (70) eine Rastgesperre ist.

5. Vorrichtung gemäß Anspruch 1, **dadurch gekennzeichnet, dass** das Sperrerelement eine Sperrerkugel (80) ist.

6. Vorrichtung gemäß Anspruch 2, **dadurch gekennzeichnet, dass** das Schiebekeilelement (87) ein Sperrerbolzen ist, der an einer dem Sperrerelement (80) zugewandten Stirnseite eine gegenüber seiner Mittellinie geneigte Sperrerkeilfläche (88) aufweist.

7. Vorrichtung gemäß Anspruch 6, **dadurch gekennzeichnet, dass** die Sperrerkeilfläche (88) gegenüber der Mittellinie des Sperrerbolzens (87) einen Winkel von 20 bis 40 Winkelgraden einschließt.

8. Vorrichtung gemäß Anspruch 1, **dadurch gekennzeichnet, dass** das Sperrstück (71) zwischen dem Spindelantrieb (60, 65, 68) und dem Reibgehemme (90) angeordnet ist.

9. Vorrichtung gemäß Anspruch 1, **dadurch gekennzeichnet, dass** der Antrieb (160-199) einen Hubmagnet (160), ein Hebelgetriebe (166-168) und ein Mehrfach-Klemmrichtgesperre (170) umfasst.

## Claims

1. A clamping and/or emergency braking device to be mounted on a carriage that moves along at least one guide rail, said device being comprised of at least one friction pad (90), said friction pad having at least one friction yoke (96) that runs on bearings in a case (10, 15, 110) and can be pressed against the line rail as well as a spring-loaded accumulator (51 - 53) with a spring element (52) and said friction pad (90) being moved in one direction trough the resiliency of the spring element (52) and moved in the reverse direction to alleviate the load through the feed of a pneumatic, hydraulic, electromagnetic, electromechanical or piezoelectric drive, wherein
- a locking part (71, 171) is placed between said drive (60, 160) and said spring-load accumulator (51-53), said locking part being part of a locking mechanism (70, 170),
- said locking part (71, 171) is fastened opposite the case (10, 15, 110) through a locking device (80, 181), said locking part being part of a locking mechanism (70, 170), whereby the spring element (52) is under load,
- said locking device (80, 181) is held in its locking position by an electromagnetic or electromechanical drive (85, 160-199).

2. The device of claim 1, wherein said locking device (80), which is part of a slide wedge drive (73, 80, 88) located in a case (10, 15), is positioned with mechanically and/or frictionally fit into a notched or locking recess (73) by a wedge element (87) moved by an electromagnetic or electromechanical drive.

3. The device of claim 1, wherein the drive holding said locking device is an electromagnet (85).

4. The device of claim 1, wherein the locking mechanism (70) is a snap-in locking mechanism.

5. The device of claim 1, wherein the locking device is a locking ball (80).

6. The device of claim 2, wherein said wedge element (87) is a block bolt, which has at its front end showing towards the locking device (80) a wedged-shaped surface (88) inclined relative to its centre line.

7. The device of claim 6, wherein said wedged-shaped surface (88) lies at an angle of 20 to 40 degree to said block bolt centre line (87).

8. The device of claim 1, wherein said locking part (71) is located between the spindle drive (60, 65, 68) and said friction pad (90).

9. The device of claim 1, wherein said drive (160-199) is comprised of an electric lifting magnet (160), a lever mechanism (166-168) and a multiple locking mechanism with directional clamping (170).

## Revendications

1. Dispositif de serrage et/ou d'arrêt d'urgence destiné à être monté sur un chariot guidé par au moins un rail-guide, où le dispositif comprend au moins un patin à friction (90) qui présente au moins une mâchoire à friction (96) placée sur des paliers dans un carter (10, 15, 110) et peut s'appliquer sur le rail-guide ainsi qu'un accumulateur à ressorts (51 - 53) avec un élément à ressort (52) et où le patin à friction (90) est déplacé dans une direction grâce à la force de tension de l'élément à ressort (52) et, afin de relâcher ladite tension, dans la direction inverse au moyen d'une force d'avancement produite par un entraînement pneumatique, hydraulique, électromagnétique, électromécanique ou piézoélectrique,
**caractérisé en ce que**
- une pièce de blocage (71, 171) est placée entre l'entraînement (60, 160) et l'accumulateur à ressort (51-53) en tant que partie d'un dispositif d'encliquetage (70, 170),
- la pièce de blocage (71, 171) est fixée par une élément de blocage (80, 181) en tant que partie d'un dispositif d'encliquetage (70, 170) en face du carter (10, 15, 110), l'élément à ressort étant sous tension (52)
- l'élément de blocage (80, 181) est maintenu dans sa position de blocage par un entraînement électromagnétique ou électromécanique (85, 160-199).

2. Dispositif selon la revendication 1, **caractérisé en ce que** l'élément de blocage (80), qui fait partie d'un engrenage à clavette coulissante (73, 80, 88) situé dans un carter (10, 15), est positionné par blocage et/ou adhérence par une clavette coulissante (87) que déplace un entraînement électromagnétique ou électromécanique dans un évidement à cran ou d'arrêt (73).

3. Dispositif selon la revendication 1, **caractérisé en ce que** l'entraînement servant au maintien de l'élément de blocage est un électro-aimant (85).

4. Dispositif selon la revendication 1, **caractérisé en ce que** le dispositif d'encliquetage (70) est un dispositif à cran d'arrêt.

5. Dispositif selon la revendication 1, **caractérisé en ce que** l'élément de blocage (70) est une bille de blocage (80).

6. Dispositif selon la revendication 2, **caractérisé en ce que** la clavette coulissante (87) est une cheville d'arrêt qui présente sur sa face avant, orientée vers l'élément de blocage (80), une surface cunéiforme de blocage (88) par rapport à sa ligne médiane.

7. Dispositif selon la revendication 6, **caractérisé en ce que** la surface cunéiforme de blocage (88) inclut un angle de 20 à 40 degrés par rapport à la ligne médiane de la cheville d'arrêt (87).

8. Dispositif selon la revendication 1, **caractérisé en ce que** la pièce de blocage (71) est placée entre la commande des broches (60, 65, 68) et le patin à friction (90).

9. Dispositif selon la revendication 1, **caractérisé en ce que** l'entraînement (160-199) comprend un électroaimant de levage (160), un engrenage à levier (166-168) et un dispositif d'encliquetage multiple par blocage directionnel (170).
